# EUROPEAN PATENT APPLICATION

(11) **EP 4 414 839 A1**
(43) Date of publication of application: **14.08.2024**
(21) Application number: 23155366.0
(22) Date of filing: 07.02.2023
(51) Int. Cl.: G06F 9/48, G06F 9/50, H04L 67/00

(54) **COMPUTER-IMPLEMENTED METHOD, COMPUTER PROGRAM PRODUCT AND COMMUNICATION SYSTEM FOR PROVIDING AN APPLICATION**

(71) Applicant: Siemens Aktiengesellschaft, 80333 München (DE)
(72) Inventor: Ziller, Andreas, 82041 Oberhaching (DE); Bröring, Arne, 81735 München (DE)
(74) Representative: Siemens Patent Attorneys

(57) **Abstract**

A computer-implemented method for providing an application is proposed, comprising:
a) transmitting a demand of the application,
b) selecting multiple target devices out of multiple devices based on the demand and specifications of each of the multiple devices,
c) examining each target device with respect to its specifications for obtaining information,
d) allocating each target device to a specific group of multiple groups in dependence on a type of each target device, wherein one of the target devices is formed as a relocation device allocated to a first group included in the multiple groups,
e) determining a plan in dependence on the obtained information and the target devices, wherein the determined relocation plan indicates specific preparation steps, and
f) translating the plan into computer commands for executing the specific preparation steps on the relocation device.

## Description

The present invention relates to a computer-implemented method, a computer program product and a communication system for providing an application to a relocation computing device.

Edge computing is a core pillar in Internet-of-Things (IoT) industry environments. It enables high profile applications (apps) for slim clients by offloading processing power. The proximity of the edge to the clients preserves further latency and reduces load on the upstream networks.

Apps, in particular edge apps, with special demands (e.g., hardware acceleration for model training) are deployed on suitable edge device types. Traditionally, it is understood that an application (app), in particular an edge app, is a specification for (docker) containers which is augmented by a description how the containers are started and metadata of app itself.

However, relocating an app from one device to another device introduces a relocation delay, independently if it happens because of failover or performance optimization. Further, the transfer of app images as well as the building and starting of the containers can add up to several minutes.

Conventionally, most edge apps are deployed in a static way, where a service engineer decides on which computing device, in particular edge device, a specific app has to be started. Container management tools as Kubernetes support caching of container images on nodes or computing devices.

Document EP 386 983 5 A1 discloses a method for relocating an app in a mobility scenario. Here, target computing devices on a trajectory of a vehicle are determined and preparation steps are taken on a target computing device in the vicinity of the vehicle if the vehicle drives from the realm of one computing device to the target computing device. In EP 386 983 5 A1, the relocation is performed only based on mobility parameters including radio signals and location information of the vehicle and/or the target edge devices. Further, these mobility parameters include information indicating a distance between the vehicle and the target computing device and indicating a time point when the vehicle arrives at the target computing device.

Thus, it is one object of the present invention to improve the providing of an application.

According to a first aspect, a computer-implemented method for providing an application to a relocation computing device of multiple computing devices included in a communication system is proposed. The method comprising:
a) transmitting a specification including a desired application demand of the application to an orchestration unit,
b) selecting, by the orchestration unit, a group of possible target computing devices out of the multiple computing devices based on the desired application demand and device specifications of each of the multiple computing devices,
c) examining, by the orchestration unit, each possible target computing device of the selected group with respect to its respective device specifications for obtaining load information indicating a current computational load of each possible target computing device,
d) allocating, by the orchestration unit, each possible target computing device of the selected group to a specific computing group out of multiple different computing groups in dependence on a respective type of each possible target computing device, wherein the multiple different computing groups include a first group including a relocation computing device type, wherein at least one of the possible target computing devices of the selected group is formed as a relocation computing device and is allocated to the first group,
e) determining, by the orchestration unit, a relocation plan in dependence on at least the obtained load information, characteristics of the application and the possible target computing devices of the selected group, in particular the relocation computing device, wherein the determined relocation plan indicates specific preparation steps of a set of preparation steps which are executable at least on the relocation computing device and indicates a preparation time period describing a time period for executing the specific preparation steps of the set of preparation steps, and
f) translating the relocation plan into computer commands and applying the computer commands at a first time point on the relocation computing device for executing the specific preparation steps on the relocation computing device.

Using the present computer-implemented method, the providing, in particular the relocating, of an application (app) is improved due to the executing of the specific preparation steps on all eligible relocation computing devices in advance in dependence on a desired application demand and device specifications.

With the above-described computer-implemented method, it is possible to execute the specific preparation steps on those computing devices, in particular the relocation computing device and/or the further relocation computing device, in advance, which are potential target computing devices to relocate the app. The selection of those computing devices is carried out based on a desired application demand and device specifications of those computing devices. In dependence on the selected possible target computing devices, the relocation plan can be determined such that the desired application demand, the device specifications and the selected possible target computing devices are coordinated with each other to optimize a relocation delay of the app, that is, that the relocation delay is as small as possible, while executing a relocation of the app from one computing device to another computing device.

Therefore, it is ensured that if an active computing device, which is a computing device on which the app runs, fails or an app on the active computing device degrades, the app is immediately relocated to on one of the relocation computing devices and can then be started on one of the relocation computing devices after the executed relocation. Thus, a relocation delay is optimized and can be avoided or at least reduced and mitigated.

This has the advantage that the unavailability time of an app also on unplanned relocations, e.g., due to failures, is reduced and that means to trade-off unavailability time with allocated resources are provided.

A further advantage is that the relocation efforts of apps, in particular edge apps, in a cluster of (edge) device are minimized. This enables a fine granular adaptation of resource utilization to achieve certain service levels. Higher service level with respect to availability are achievable with less hardware. In addition, the above-described computer-implemented method provides seamless relocation of (edge) apps without downtimes. This improves the app experience.

A computer-implemented method is a method which involves the use of a computer, a computer network or other programmable apparatus, where one or more features are realized wholly or partly by means of a computer program.

In particular, the term "providing" is understood to mean that it also includes a relocating of the app. For example, the term "relocating" is understood to mean that the app can be provided (or relocated) from one computing device, for example the active computing device, to another computing device, for example the relocation computing device. Further, the term "relocating" also includes executing relocation steps and starting the app on the relocation computing device.

For example, the orchestration unit is configured to automatically decide, in dependence on the relocation plan, when and where an app has to be deployed and/or relocated. Preferably, the orchestration unit, in particular in combination with the management unit, is configured to dynamically relocate apps due to changing conditions in the communication system, for example an overload of computing devices, and/or occurring incidents, for example failures of computing devices. The orchestration unit can be formed as a Kubernetes orchestration system, can be part of a Kubernetes orchestration system or can be embodied as a control plane of a Kubernetes orchestration system.

Preferably, a possible target computing device is a computing device which is able to run the app.

For example, respective device specifications include a size of a main memory (RAM) of the computing device of the multiple computing devices, a processor power (CPU) of the computing device of the multiple computing devices and/or the size of a storage space of the computing device of the multiple computing devices as a whole or the size of a storage space which is unused.

Further, the obtained load information can include a respective network capacity of each of the possible target computing devices of the selected group. Specifically, a current computational load can be formed as a current computational load of the main memory (RAM), as a current computational load of the processor power (CPU), as a current computational load of the storage space load and/or as a current computational load of a number of apps running on the respective possible target computing device. The current computational loads of each possible target computing device can also be formed as real-time metrics of the possible target computing device.

Preferably, the relocation plan is a plan, which indicates which possible target computing devices act as active and/or relocation computing devices and on which of these computing devices, the specific preparation steps and/or the first or second relocation steps are executed. Further, the relocation plan indicates, which app is started on which relocation computing device.

In particular, characteristics of the app can include the size of the app, for example the transfer size of container images, a startup time of the app and/or the expected build time of the container on a respective possible target computing device.

The set of preparation steps can include the following single preparation steps: preloading container images, prebuilding containers, running the app as a backup device or spare device ("hot-standby"), transferring app states ("keep-in-sync") and/or synchronizing app states. In particular, the specific preparation steps can include one or more of the following single preparation steps of the set of preparation steps mentioned above.

Specifically, the number of specific preparation steps of the set of preparation steps which are executed on the respective relocation computing device depends on the service level of the app, the availability of resources, for example the computing power, the network traffic and velocity and/or the storage used, on the respective possible target computing device and/or the energy effort or energy costs. Accordingly, the orchestration unit can determine with respect to the desired application demand or the desired service level of the app and the present relocation computing devices, which number and which of the specific preparation steps of the set of preparation steps are executed on the respective possible target computing device. Preferably, each executed specific preparation step includes all previous preparation steps.

In particular, the length of the preparation time period and/or the further preparation time period depends on the number of preparation steps of the set of preparation steps which has to be executed on the respective relocation computing device.

For example, after the executing of the specific preparation steps on the relocation computing device, the relocation computing device runs in "hot-standby". The term "hot-standby" means that the components for starting the app are present on the relocation computing device and the app is running on the relocation computing device. In particular, in this state, the app does not receive a workload, but is stored in a memory unit and is therefore instantiated. Preferably, in this state, the relocation computing device waits until it is switched into an active state for executing the relocation on the relocation computing device and then for starting the app.

Preferably, the orchestration unit initiates the specific preparation steps before initiating the executing of the relocation and/or the further relocation. Thus, the executing of the specific preparation steps has the advantage to speed up the relocation or the further relocation of the app since the specific preparation steps are executed in advance.

According to a further embodiment, step e) further includes:
determining the specific preparation steps of the set of preparation steps in dependence on an application service level, a relocation time period and/or a further relocation time period, a likelihood of an executing of a possible relocation and/or a further relocation and/or the computational effort for provisioning the app on at least one of the possible target computing devices.

According to a further embodiment, step f) further includes:
applying the computer commands at the first time point on the further relocation computing device and/or another further relocation computing device for additionally executing the specific preparation steps on the further relocation computing device and/or the another further relocation computing device.

In addition, at the first time point, the computer commands can also be applied to further computing devices of the first group which are allocated to the relocation computing type for executing the specific preparation steps on the further computing devices of the first group.

According to a further embodiment, step f) further includes:
translating, by the orchestration unit, the relocation plan into computer commands,
executing, by the orchestration unit, the computer commands on a management unit of the communication system, and
applying, by the management unit, the computer commands at the first time point on the relocation computing device for executing the specific preparation steps on the relocation computing device.

According to an embodiment, the multiple different computing groups include a second group including an active computing device type, wherein at least one of the possible target computing devices of the selected group is formed as an active computing device and is allocated to the second group, wherein step f) further includes:
applying the computer commands at the first time point for executing a deployment of the application on the active computing device, wherein the deployment includes executing the specific preparation steps at the first time point and starting the application after the preparation time period.

Since the specific preparation steps are already executed on the active computing device as well as on the relocation computing device at the same time at the first time point, if a failure occurs on the active computing device, it is advantageously possible to immediately start the app on the relocation computing device after the preparation time period. This also avoids the relocation delay of the app.

The term "deployment" can also be referred to as "provisioning" of the app on the active computing device.

Preferably, the starting of the app includes the steps:
starting a container for the app or an application image, wherein the container has been previously executed during the specific preparation steps, and
transferring a user session to the relocation computing device.

In particular, the computer commands are readable by the management unit. Examples for such computer commands are: executing the specific preparation steps on the active computing device and/or the relocation computing device, starting the app on the active computing device, deleting the app from the active computing device and stopping the app on the active computing device. The management unit and the orchestration unit can also be integrated in one component.

According to a further embodiment, the method includes:
g) monitoring a device status of the active computing device including a status of the application for obtaining first status information of the active computing device and monitoring a device status of the relocation computing device including a further status of the application for obtaining second status information of the relocation computing device.

According to a further embodiment, step g) further includes:
continuously transmitting the obtained first status information and/or the obtained second status information from the management unit to the orchestration unit.

According to a further embodiment, if the obtained first status information indicates that the active computing device has a failure, the method further comprising the steps:
h) executing a relocation of the application from the active computing device to the relocation computing device, wherein the executing of the relocation of the application includes:
h1) determining a relocation time period for executing first relocation steps of a set of relocation steps on the relocation computing device in dependence on communication parameters of the communication system,
h2) executing the first relocation steps on the relocation computing device in dependence on the determined relocation time period at a second time point after the preparation time period, wherein step h2) includes:
   adding a further relocation computing device out of the selected group of possible target computing devices to the first group,
   updating the relocation plan for obtaining an updated relocation plan, wherein the updated relocation plan indicates that the active computing device is removed from the second group and the relocation computing device is switched into an active state, and
   translating the updated relocation plan into updated computer commands and applying the updated computer commands at the second time point on the further relocation computing device for executing the specific preparation steps on the further relocation computing device during a further preparation time period which is between the second time point and a third time point, and
h3) starting the application on the relocation computing device at the third time point after the executing according to step h2).

According to a further embodiment, if the obtained second status information indicates that the relocation computing device has a failure, the method further comprising the steps:
i) executing a further relocation of the application from the relocation computing device to the further relocation computing device, wherein the executing of the further relocation of the application includes:
   i1) determining a further relocation time period for executing second relocation steps of the set of relocation steps on the further relocation computing device in dependence on the communication parameters,
   i2) executing the second relocation steps on the further relocation computing device in dependence on the determined further relocation time period at a third time point after the further preparation time period, wherein step i2) includes:
      adding another relocation computing device out of the selected group of possible target computing devices to the first group,
      updating the updated relocation plan for obtaining a further updated relocation plan, wherein the further updated relocation plan indicates that the relocation computing device is removed from the first group and the further relocation computing device is switched into an active state, and
      translating the further updated relocation plan into further updated computer commands and applying the further updated computer commands at the third time point on the another relocation computing device for executing the specific preparation steps on the another relocation computing device during another preparation time period which is between the third time point and a fourth time point, and
   i3) starting the application on the further relocation computing device at the fourth time point after the executing according to step i2).

The above-described method steps S80 and S90 lead to the technical effect that it can be ensured at any time that, as soon as an active device fails, for example the active computing device, the relocation to the corresponding backup device, for example the relocation computing device, and a following starting of the app can immediately be executed since on the backup device, the specific preparation steps have already been executed in advance. Advantageously, the relocation time delay is avoided or is at least reduced. The same applies equally to the relocation computing device and the further relocation computing device according to method step S90.

Preferably, the respective specific preparation steps are executed on a backup device at a time point at which the relocation is executed on the previous backup device. For example, if at the second time point the first relocation steps are executed on the relocation computing device, then at the same time, the specific preparation steps are executed on the further relocation computing device.

In particular, at the second time point, the app can be started on the active computing device and the specific preparation steps have been executed on the relocation computing device.

For example, at the third time point, the app can be started on the relocation computing device since the relocation is finished and the specific preparation steps have been executed on the further relocation computing device.

Specifically, at the fourth time point, the app can be started on the further relocation computing device since the further relocation is finished and the specific preparation steps have been executed on the another relocation computing device.

Preferably, the preparation time period is a time period, during which the specific preparation steps are executed on the active computing device and the relocation computing device.

In particular, the relocation time period is a time period, during which the first relocation steps are executed on the relocation computing device.

For example, the further preparation time period is a time period, during which the specific preparation steps are executed on the further relocation computing device.

Specifically, the further relocation time period is a time period, during which the second relocation steps are executed on the further relocation computing device.

For example, the another preparation time period is a time period, during which the specific preparation steps are executed on the another relocation computing device.

Preferably, an initiation of the executing of the relocation and/or the further relocation of the app is started, in particular by the orchestration unit, earlier with respect to the determined (expected) relocation time period and/or determined further relocation time period. Thus, the app is available, can be started and used on the relocation computing device and/or the further relocation computing device when the relocation is finished.

Preferably, a failure is formed as a degradation of the performance of the app on the active computing device or the active computing device itself and/or as a case when the active computing device breaks or gets destroyed. Further, a failure can also be a changing condition in the communication system, for example an overload of the respective computing device, and/or an occurring of incidents, for example, failures of other respective computing devices within the communication system.

In particular, each of the possible target computing devices of the selected group is configured to execute the specific preparation steps and the relocation or the further relocation. Further, each of the possible target computing devices of the selected group is configured to start and run the app.

For example, the communication parameters include network conditions within the communication system and/or network conditions of possible target computing devices, conditions of the possible target computing devices and/or a physical motion of a mobile entity. The communication parameters can be obtained and derived by cloud parameters from a cloud within the communication system or a cloud connected to the communication system, to which the orchestration unit can have access to.

Based on the determined relocation time period or further relocation time period according to step h1) or step i1), it can be determined at which time point, the relocation according to step h) or step i) has to be initiated. This time point, at which the initiating and executing of the relocation and/or further relocation has to be performed, can be determined based on a trained machine learning model. Preferably, the machine learning model gets as an input live metrics of a utilization of the app.

For example, the orchestration unit updates the relocation plan according to step h2) and/or updates the updated relocation plan according to step i2).

According to a further embodiment, the specific preparation steps include downloading an application image of the application and building a container for the downloaded application image.

In particular, the application image is downloaded or is received from a registry of the communication system.

For example, the container is a software container in which a respective app can be executed. Apps designed as micro-services, or several parts of one app can be executed independently of each other on the same hardware in a container. A group of apps can also be executed on different individual containers or within one single container.

According to a further embodiment, step b) further includes:
selecting, by the orchestration unit, the group of possible target computing devices out of the multiple computing devices based on the desired application demand and the device specifications of each of the multiple computing devices and/or based on the obtained load information.

According to a further embodiment, the load information as well as the characteristics of the application for determining the relocation plan according to step e) are obtained in dependence on test runs of the application, reports from possible target computing devices of the selected group and/or executed models of the application and/or the possible target computing devices of the selected group.

Preferably, test runs include test builds of the app container and/or test starts of the container. For example, the reports include information about network speed and/or network load from the possible target computing devices. The models can be mathematical models. Test results resulting from an executed modelling of the models in dependence on the app and/or the possible target computing devices of the selected group, can be translated into expected results according to characteristics of the possible target computing devices.

According to a further embodiment, the method includes:
tracking a location of a mobile entity during its motion from a first area including the active computing device to a second area including a further active computing device,
determining a specific point in time when the mobile entity leaves the first area,
executing the specific preparation steps on the further active computing device prior to the determined specific point in time, and
starting the application at a further point in time on the further active computing device when the mobile entity leaves the first area and after the execution of the specific preparation steps.

According to a further embodiment, the method includes:
tracking the location of the mobile entity during its motion from the first area to the second area for obtaining mobility information from the mobile entity.

For example, the orchestration unit receives the mobility information from the mobile entity. Mobility information includes, for example, a position, a speed and/or a heading of the mobile entity.

Preferably, the first area and/or second area is an area in which the vehicle can receive radio signals from the respective computing device within the first area and/or the second area. For example, the first area and/or second area is a mobile radio cell.

According to a further embodiment, the method includes:
b) selecting, by the orchestration unit, a group of possible target computing devices out of the multiple computing devices based on the mobility information, wherein the selected group is optimal with respect to the trajectory of the mobile entity.

According to a further embodiment, the method includes:
selecting, by the orchestration unit, the further active computing device out of the multiple computing devices based on the desired application demand and device specifications of each of the multiple computing devices and the further active computing device.

According to a further embodiment, the desired application demand is formed as a maximal unavailability time for the application, as an availability of the application, as a throughput of the application and/or as a delay when relocating the application.

In particular, a predefined maximal unavailability time for the app can have different levels. For example, a low-level maximal unavailability time is six minutes per hour, a medium-level maximal unavailability time is three minutes per hour and a high-level maximal unavailability time is one minute per hour. Each level can correspond to a different service level which is desired for the app. Preferably, the desired application demand is formed as a maximal unavailability time for an app due to a relocation, so that a service level of the app is still achievable. For example, an image classification app for a robot has a maximal unavailability time of 30 seconds per hour due to the relocation.

For example, the throughput of the app is the amount of data, the app and/or the possible target computing device can process within a predetermined time interval.

According to a further embodiment, the application is formed as an edge application, wherein the possible target computing devices of the selected group allocated to the relocation computing device type as well as allocated to the active computing device type are respectively formed as an edge device.

Further, the edge app is formed within an edge computing environment. Further, the edge app or the app can also be formed as a service, as a microservice or as a group of microservices. In particular, an app is a software, a program code or a software module. Specifically, an app is a computer program which is used to process or support a useful or desired non-system technical functionality.

In particular, a computing device of the multiple computing devices can be formed as a field device and/or as a base station or part of a base station of a mobile radio system. For example, the field device can be a field device in an automation system or a mobile radio system. In particular, a field device is a hardware- and/or software-implemented unit that has or provides a specific functionality. Examples of field devices include sensors, robots, measurement devices, computers, and the like. Sensors can also be attached to field devices. In particular, such field devices include control computers or microcontrollers, such as a field-programmable gate array (FPGA). A field device can also be a single controller or a single device. However, a field device may also have a plurality of controllers or functional units that are, for example, structurally connected and/or can functionally interact with each other. In this case, each controller or functional unit combined in the field device can be regarded as a field device linked to and/or dependent on the other controllers or functional units.

According to a further embodiment, the relocation computing device is a backup device on which the application can be started if the active computing device has the failure, wherein the further relocation computing device is a spare device on which the application can be started if the relocation computing device has the failure.

This embodiment has the advantage that by a grading by means of different relocation devices, e.g., backup and spare, the relocation delay is avoided or at least reduced.

Specifically, the another active computing device is allocated to the second group.

In addition, the possible target computing devices of the selected group can also include inactive computing devices. In particular, the another relocation computing device is an inactive device and can act as a spare device on which the app can be started if the further relocation computing device has the failure. Inactive computing devices are inactive until they are switched into an active state for backing up the further relocation computing device in case of a failure of the further relocation computing device. Moreover, the another relocation computing device can be allocated to the first group.

Each possible target computing device of the selected group of possible target computing devices can be allocated to a specific computing group out of multiple different computing groups, for example, the first or the second group. Preferably, the multiple different computing groups include the active computing device type and the relocation computing device type. The group of the relocation computing device type is subdivided into the subgroups: backup devices, spare devices and inactive devices. The active computing device is allocated to the group of the active device type. Further, the inactive computing devices are allocated to the group of inactive devices.

Any embodiment of the first aspect may be combined with any embodiment of the first aspect to obtain another embodiment of the first aspect.

According to a second aspect, a computer program product is proposed which comprises a program code for executing the above-described computer-implemented method according to the first aspect or an embodiment of the first aspect when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, a communication system for providing an application to a relocation computing device of multiple computing devices included in the communication system is proposed. The communication system comprising:
an orchestration unit,
the application,
an administration entity,
a management unit, and
the relocation computing device, wherein
the administration entity is configured to transmit a specification including a desired application demand of the application to the orchestration unit, wherein the orchestration unit is configured to:
   select a group of possible target computing devices out of the multiple computing devices based on the desired application demand and device specifications of each of the multiple computing devices,
   examine each possible target computing device of the selected group with respect to its respective device specifications for obtaining load information indicating a current computational load of each possible target computing device,
   allocate each possible target computing device of the selected group to a specific computing group out of multiple different computing groups in dependence on a respective type of each possible target computing device, wherein the multiple different computing groups include a first group including a relocation computing device type, wherein at least one of the possible target computing devices of the selected group is formed as a relocation computing device and is allocated to the first group,
   determine a relocation plan in dependence on at least the obtained load information, characteristics of the application and the possible target computing devices of the selected group, in particular the relocation computing device, wherein the determined relocation plan indicates specific preparation steps of a set of preparation steps which are executable at least on the relocation computing device and indicates a preparation time period describing a time period for executing the specific preparation steps of the set of preparation steps, and
translate the relocation plan into computer commands, wherein the management unit is configured to:
   apply the computer commands at a first time point on the relocation computing device for executing the specific preparation steps on the relocation computing device.

The technical effects and advantages described for the computer-implemented method according to the first aspect apply equally to the communication system according to the third aspect and to embodiments of the communication system according to the third aspect. Further, embodiments and features described with reference to the computer-implemented method according to the first aspect apply mutatis mutandis to the communication system according to the third aspect and embodiments of the communication system according to the third aspect.

The respective unit and/or entity, e.g., the orchestration unit, the management unit and/or administration entity, may be implemented in hardware and/or in software. If said unit or entity is implemented in hardware, it may be embodied as a device, e.g., as a computer or as a processor or as a part of a system, e.g., a computer system. If said unit or entity is implemented in software, it may be embodied as a computer program product, as a function, as a routine, as a program code or as an executable object.

Preferably, a communication system can be formed as an automation system or a radio communication system. The radio communication system can include multiple computing devices which are embodied as active computing devices and/or relocation computing devices. The automation system can be an automation plant from the process industry, the chemical industry, the pharmaceutical industry, the petrochemical industry or a plant from the food and beverage industry. This also includes any plant from the manufacturing and production industry and plants in which, for example, cars or goods of any kind are produced.

For example, the management unit is a management system or an edge management system for managing multiple computing devices, in particular edge devices, in the communication system.

Preferably, the administration entity is a computing device. Also, the administration entity can be a human administrator.

For example, it is also possible to provide multiple same or different apps to a relocation computing device or to multiple relocation computing devices. In this case, the method steps a) to i) according to the first aspect and embodiments of the first aspect can be performed based on multiple apps instead of one app. Therefore, on each relocation computing device and/or active computing device, the specific preparation steps have to be performed in order to relocate and start the multiple apps to a later time point.

According to an embodiment of the third aspect, the communication system includes:
an active computing device which is formed as one of the possible target computing device of the selected group, wherein the multiple different computing groups include a second group including an active computing device type, wherein the active computing device is allocated to the second group, wherein the management unit is further configured to:
apply the computer commands at the first time point for executing a deployment of the application on the active computing device, wherein the deployment includes executing the specific preparation steps at the first time point and starting the application after the preparation time period.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention. Independent of the grammatical term usage, individuals with male, female or other gender identities are included within the term.

Further embodiments, features and advantages of the present invention will become apparent from the subsequent description and dependent claims, taken in conjunction with the accompanying drawings, in which:
- Fig. 1: shows a schematic block diagram of an embodiment of a communication system;
- Fig. 2: shows a first timeline and a second timeline according to an embodiment;
- Fig. 3: shows an embodiment of a relocation plan; and
- Fig. 4: shows a schematic flowchart of an embodiment of a computer-implemented method for providing an application to a relocation computing device.

In the Figures, like reference numerals designate like or functionally equivalent elements, unless otherwise indicated.

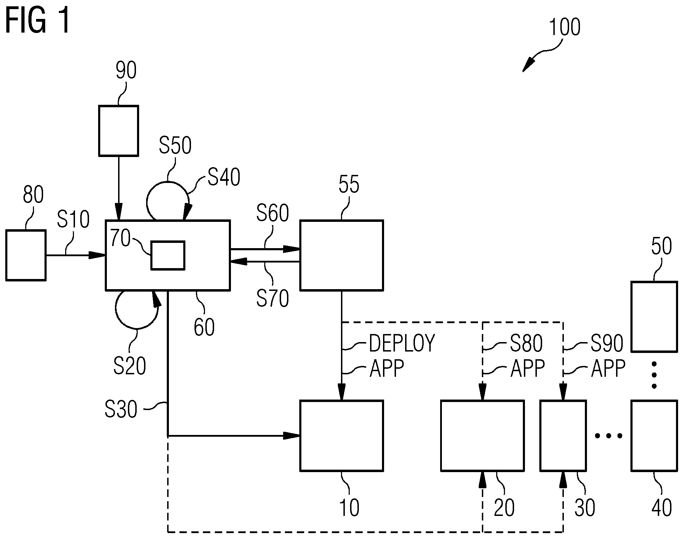

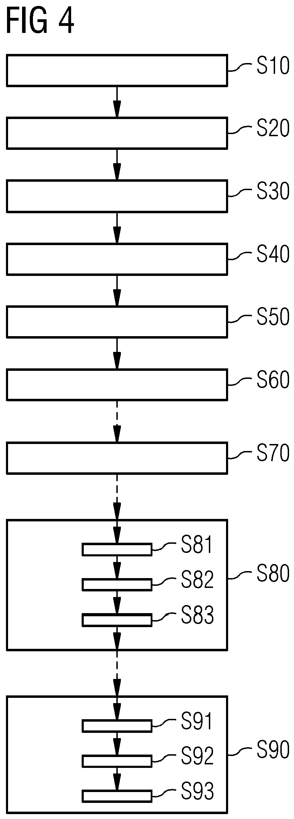

Fig. 1 shows a schematic block diagram of an embodiment of a communication system 100 for providing an application (app) APP to a relocation computing device 20 of multiple computing devices 10, 20, 30, 40, 50 which are included in the communication system 100. In addition, references to the method steps of Fig. 4, which describes a computer-implemented method for providing an app APP to a relocation computing device 20, are indicated in parentheses in the following explanations of Fig. 1.

In Fig. 1, the communication system 100 includes an orchestration unit 60, the app APP, an administration entity 80, a management unit 55, the relocation computing device 20 and a storage unit 90. In Fig. 1, an application image is downloaded or is received from the storage unit 90 which is embodied as a registry of the communication system 100. Further, in Fig. 1, a further relocation computing device 30, another relocation computing device 40 and an inactive device 50 are shown.

In the following, the process of providing an app APP to an active computing device 10 and to the relocation computing device 20 is described.

In a first step, the administration entity 80 is configured to transmit a specification including a desired application demand of the app APP to the orchestration unit 60 (see also method step S10 of Fig. 4). In Fig. 1, the desired application demand is formed as a maximal unavailability time for the app APP, for example 180 seconds per hour. In embodiments, the desired application demand is formed as an availability time of the app APP, as a throughput of the app APP or as a maximal delay when relocating the app APP (not shown).

Then, the orchestration unit 60 is configured to select a group of possible target computing devices 10, 20, 30, 40 out of the multiple computing devices 10, 20, 30, 40, 50 based on the desired application demand and device specifications of each of the multiple computing devices 10, 20, 30, 40, 50 (see also method step S20 of Fig. 4).

Further, the orchestration unit 60 is configured to examine each possible target computing device 10, 20, 30, 40 of the selected group with respect to its respective device specifications for obtaining load information indicating a current computational load of each possible target computing device 10, 20, 30, 40 (see also method step S30 of Fig. 4). This is also shown by the arrow from the orchestration unit 60 to the computing devices 10, 20 and 30, wherein the arrow has the reference numeral S30. In another embodiment, the orchestration unit 60 is configured to additionally select the group of possible target computing devices 10, 20, 30, 40 based on the obtained load information (not shown).

Next, the orchestration unit 60 is configured to allocate each possible target computing device 10, 20, 30, 40 of the selected group to a specific computing group out of multiple different computing groups in dependence on a respective type of each possible target computing device 10, 20, 30, 40.

The multiple different computing groups include a first group including a relocation computing device type and a second group including an active computing device type. One of the possible target computing devices 10, 20, 30, 40 of the selected group is formed as a relocation computing device 20 and is allocated to the first group (see also method step S40 of Fig. 4). Further, one of the possible target computing devices 10, 20, 30, 40 of the selected group is formed as an active computing device 10 and is allocated to the second group.

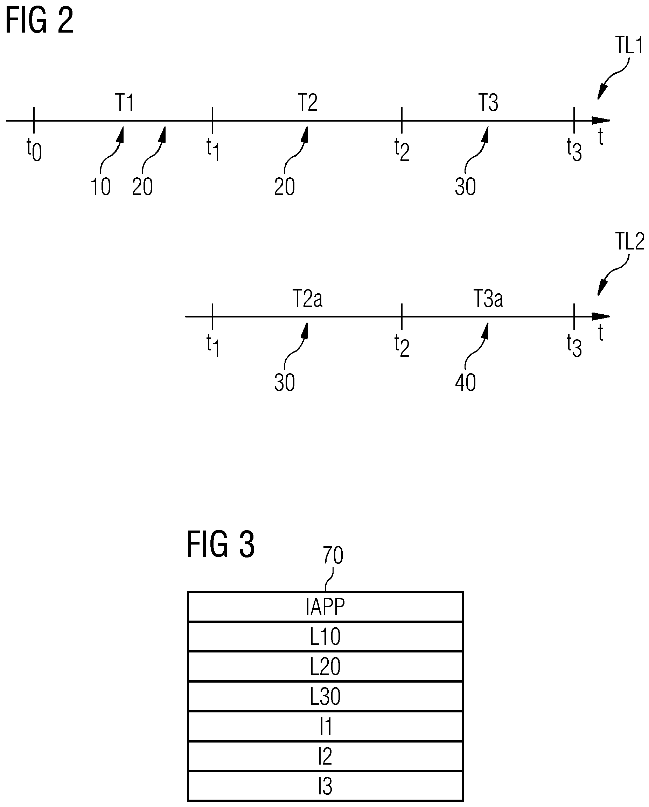

Afterwards, the orchestration unit 60 is configured to determine a relocation plan 70 (see also Fig. 3) in dependence on the obtained load information, characteristics of the app APP and the possible target computing devices 10, 20, 30, 40 of the selected group (see also method step S50 of Fig. 4). The determined relocation plan 70 indicates specific preparation steps of a set of preparation steps which are executable on the relocation computing device 20 and indicates a preparation time period T1 (see Fig. 2) describing a time period for executing the specific preparation steps of the set of preparation steps.

Furthermore, the orchestration unit 60 is configured to translate the relocation plan 70 into computer commands (see also method step S60 of Fig. 4).

Subsequently, the management unit 55 is configured to apply the computer commands at a first time point t₀ (see Fig. 2) on the relocation computing device 20 for executing the specific preparation steps on the relocation computing device 20 (see also method step S60 of Fig. 4).

In addition, the management unit 55 is further configured to apply the computer commands at the first time point t₀ for executing a deployment DEPLOY of the app APP on the active computing device 10. In Fig. 1, the deployment DEPLOY includes executing the specific preparation steps at the first time point t₀ and starting the app APP after the preparation time period T1.

In Fig. 1, the management unit 55 is configured to monitor a device status of the active computing device 10 including a status of the app APP for obtaining first status information of the active computing device 10 and to monitor a device status of the relocation computing device 20 including a further status of the app APP for obtaining second status information of the relocation computing device 20 (see also method step S70 of Fig. 4).

Further, the orchestration unit 60 is configured to continuously receive the obtained first and second status information from the management unit 55.

In embodiments, the load information as well as the characteristics of the app APP for determining the relocation plan 70 according to step S50 are obtained in dependence on test runs of the app APP, reports from possible target computing devices 10, 20, 30, 40 of the selected group and/or executed models of the app APP or the possible target computing devices 10, 20, 30, 40 of the selected group (not shown).

In Fig. 1, the app APP is formed as an edge app. Further, the possible target computing devices 10, 20, 30, 40 of the selected group allocated to the relocation computing device type as well as allocated to the active computing device type are respectively formed as an edge device.

A further example of a providing of the app APP to a specific relocation computing device according to one embodiment is explained in the following (not shown):
The app APP is used by mobile entities, for example vehicles, which move between the realm of different edge devices.

At this, first, the orchestration unit 60 tracks a location of a mobile entity during its motion from a first area including the active computing device 10 to a second area including a further active computing device. For example, the location is tracked via a 5G Multi-Access Edge Computing (MEC) location service.

Then, the orchestration unit 60 determines or predicts a specific point in time when the mobile entity leaves the first area. Afterwards, the orchestration unit 60 executes the specific preparation steps on the further active computing device prior to the determined specific point in time. Next, the orchestration unit 60 relocates the app APP from the active computing device 10 to the further active computing device. At last, the orchestration unit 60 starts the app APP at a further point in time on the further active computing device when the mobile entity leaves the first area and after the execution of the specific preparation steps, so that the app APP is available once the mobile entity reaches the second area of the further active computing device.

Fig. 2 shows a first timeline TL1 and a second timeline TL2 according to an embodiment. In addition, references to the method steps of Fig. 4, which describes a computer-implemented method for providing an app APP (see Fig. 1) to a relocation computing device 20 (see also Fig. 1), are indicated in parentheses in the following explanations of Fig. 2.

The first timeline TL1 extends in the x-axis along the time t and shows and includes a preparation time period T1, a relocation time period T2 and a further relocation time period T3. The second timeline TL2 extends also in the x-axis along the time t and shows and includes a further preparation time period T2a and another preparation time period T3a.

As shown in Fig. 2, the relocation time period T2 and the further preparation time period T2a start at the same time at the second time point t₁. Further, the further relocation time period T3 and the another preparation time period T3a start also at the same time at the third time point t₂.

In the following, the method steps of a relocation of the app APP from the active computing device 10 (see also Fig. 1) to the relocation computing device 20 are explained based on the first and second timelines TL1 and TL2 and based on Fig. 4. The relocation is also shown in Fig. 1 based on the dashed lines from the management unit 55 to the relocation computing device 20 and based on the reference sign S80.

If the obtained first status information according to Fig. 1 indicates that the active computing device 10 has a failure, the computer-implemented method according to Fig. 4 comprises the step S80, namely an executing of the relocation of the app APP from the active computing device 10 to the relocation computing device 20.

Further, step S80 includes the steps S81, S82 and S83 (see Fig. 4).

In step S81, a relocation time period T2 for executing first relocation steps of a set of relocation steps on the relocation computing device 20 in dependence on communication parameters of the communication system 100 (see Fig. 1) is determined.

Next, in step S82, the first relocation steps on the relocation computing device 20 in dependence on the determined relocation time period T2 at a second time point t₁ after the preparation time period T1 are executed. In this example, the preparation time period T1 starts at a first time point t₀. During the preparation time period T1, which ends at the second time point t₁, the specific preparation steps are executed on the active computing device 10 and the relocation computing device 20 for a later starting the app APP on the active computing device 10 and the later relocation on the relocation computing device 20. In this example, the specific preparation steps include downloading an application image of the app APP and building a container for the downloaded application image. In embodiments, the specific preparation steps can differ from the above-mentioned ones (not shown). Further, the first relocation steps as well as the second relocation steps include in Fig. 2 the steps of starting the built container and transferring a user session to the respective relocation computing device 20 or 30 (see also Fig. 1) .

Further, also in step S82, a further relocation computing device 30 (see also Fig. 1) out of the selected group of possible target computing devices 10, 20, 30, 40 (see also Fig. 1) is added to the first group. In doing so, the relocation computing device 20 is a backup device on which the app APP can be started if the active computing device 10 has the failure, and the further relocation computing device 30 is a spare device on which the app APP can be started if the relocation computing device 20 has the failure. In addition, the inactive device 50 (see Fig. 1) is a further spare device on which the app APP can be started if the another relocation computing device 40 has the failure.

Afterwards, in step S82, a relocation plan 70 (see Fig. 1 or 3) is updated for obtaining an updated relocation plan, wherein the updated relocation plan indicates that the active computing device 10 is removed from the second group and the relocation computing device 20 is switched into an active state.

Then, in step S82, the updated relocation plan is translated into updated computer commands and the updated computer commands are applied at the second time point t₁ on the further relocation computing device 30 for executing the specific preparation steps on the further relocation computing device 30 during a further preparation time period T2a which is between the second time point t₁ and a third time point t₂.

Thus, at the first time point t₁, when the relocation to the relocation computing device 20 starts, also the specific preparation steps on the further relocation computing device 30 during the further preparation time period T2a are executed. Therefore, the specific preparation steps on the further relocation computing device 30 are already finished when the relocation on the relocation computing device 20 is finished. Consequently, if the relocation computing device 20 would have a failure, then, it is possible to immediately relocate the app APP at the third time point t₂ to the further relocation computing device 30, since on the further relocation computing device 30, already the specific preparation steps have been executed.

Then, in step S83, the app APP is started on the relocation computing device 20 at the third time point t₂ after the executing of step S82.

Next, the method steps of a further relocation of the app APP from the relocation computing device 20 to the further relocation computing device 30 are explained based on the first and second timelines TL1 and TL2 and based on Fig. 4. The further relocation is also shown in Fig. 1 based on the dashed lines from the management unit 55 to the relocation computing device 30 and based on the reference sign S90.

If the obtained second status information according to Fig. 1 indicates that the relocation computing device 20 has the failure, the computer-implemented method according to Fig. 4 comprises the step S90, namely an executing of the further relocation of the app APP from the relocation computing device 20 to the further relocation computing device 30.

Further, step S90 includes the steps S91, S92 and S93 (see Fig. 4).

In step S91, a further relocation time period T3 for executing second relocation steps of the set of relocation steps on the further relocation computing device 30 in dependence on the communication parameters is determined.

Afterwards, in step S92, the second relocation steps on the further relocation computing device 30 in dependence on the determined further relocation time period T3 at the third time point t₂ after the further preparation time period T2a are executed. In this example, the further preparation time period T2a starts at the second time point t₁. During the further preparation time period T2a, which ends at the third time point t₂, the specific preparation steps are executed on the further relocation computing device 30 for a later relocation of the app on the further relocation computing device 30.

Further, also in step S92, another relocation computing device 40 (see also Fig. 1) out of the selected group of possible target computing devices 10, 20, 30, 40 is added to the first group.

Next, in step S92, the updated relocation plan is updated for obtaining a further updated relocation plan, wherein the further updated relocation plan indicates that the relocation computing device 20 is removed from the first group and the further relocation computing device 30 is switched into an active state.

Then, in step S92, the further updated relocation plan is translated into further updated computer commands and the further updated computer commands are applied at the third time point t₂ on the another relocation computing device 40 for executing the specific preparation steps on the another relocation computing device 40 during another preparation time period T3a which is between the third time point t₂ and a fourth time point t₃.

Thus, at the second time point t₂, when the further relocation to the further relocation computing device 30 starts, also the specific preparation steps on the another relocation computing device 40 during the another preparation time period T3a are executed. Therefore, the specific preparation steps on the another relocation computing device 40 are already finished when the further relocation on the further relocation computing device 30 is finished. Consequently, if the further relocation computing device 30 would have a failure, then, it is possible to immediately relocate the app APP at the fourth time point t₃ to the another relocation computing device 40, since on the another relocation computing device 40, already the specific preparation steps have been executed.

Then, in step S93, the app APP is started on the further relocation computing device 30 at the fourth time point t₃ after the executing of step S92.

Based on Figs. 1 and 2 as well as the steps S80 and S90, further examples for providing and relocating the app on the relocation computing devices are described in the following in dependence on a desired application demand, namely the maximal unavailability time or the availability time of the app APP:

### First example

In the first example, the app APP has the highest availability constraints and has a maximal unavailability time for the app APP of one minute per hour.

The selected group of possible target computing devices 10, 20 and 30 comprises as a result of the executing of step S20 of the computer-implemented method according to Fig. 4 the active computing device 10, the relocation computing device 20 and the further relocation computing device 30.

Then, the specific preparation steps are executed at the first time point t₀ on the active computing device 10 and the relocation computing device 20. In this first example, the specific preparation steps include downloading the application images and building the container.

After executing the specific preparation steps, the app APP is started on the active device, namely the active computing device 10. On the backup device, namely the relocation computing device 20, then the app APP runs in "hot-standby". At this time point, the further relocation computing device 30 is untouched.

When the active computing device 10 has the failure, the backup device becomes active, for example, by updating the relocation plan 70 (see Figs. 1 and 3). Consequently, the third device, namely the further relocation computing device 30, gets provisioned with the app APP and runs then in "hot-standby".

### Second example

In the second example, the app APP has medium availability constraints and allows a downtime (a maximal unavailability time) for the app APP of three minutes per hour.

First, the orchestration unit 60 determines that the expected time till the app APP is running on a respective computing device depends on a combination of the preparation time period T1 and the relocation time period T2. The time required for the combination is six minutes since the application image loading takes three minutes (within the preparation time period T1), the container building takes two minutes (within the preparation time period T1) and the start-up of the app APP takes one minute (within the relocation time period T2).

Thus, the orchestration unit 60 executes the specific preparation steps including the loading of the application image and the container building on one backup edge device, namely the relocation computing device 20.

In this case, an executing of a relocation would include only starting up the containers at the backup edge device which takes one minute (equals to the relocation time period T2).

Since the app APP allows a downtime of three minutes per hour, and a relocation lasts one minute, three relocations per hour are within the limits of the application service level with respect to the maximal unavailability time.

Consequently, a relocation strategy of orchestration unit 60 could be, that the app APP is at most two times relocated per hour due to performance degradation to have surely one relocation left in case of failures.

Fig. 3 shows an embodiment of a relocation plan 70 (see also Fig. 1). The relocation plan 70 includes multiple data fields, namely a first data field IAPP, a second data field I1, a third data field I2, a fourth data field I3, a first list L10, a second list L20 and a third list L30.

The first data field IAPP includes information about the Uniform Resource Identifier (URI) for the container image of the app APP. Further, the first list L10 includes a list of active computing devices 10 which are configured to run and start the app APP. Moreover, the second list L20 includes a list of possible target computing devices on which the specific preparation steps can be executed. This includes the relocation computing device 20. In addition, the third list L30 includes a list of possible target computing devices which act as a spare or inactive computing device and can become backup or active. These are a further relocation computing device 30, another relocation computing device 40 and an inactive device 50 (see Figs. 1 and 2).

Furthermore, the second data field I1 includes the set of preparation steps which include examples of the specific preparation steps: "Do nothing", "Load application image", "Build container", "Start app" and/or "Synchronize app state". Moreover, the third data field I2 includes the relocation time period for relocating the app APP taking the specific preparation steps according to the second data field I1 into account. In addition, the fourth data field I3 includes additional meta information for executing the app APP or transferring the app APP.

Fig. 4 shows a schematic flowchart of an embodiment of a computer-implemented method for providing an app APP to a relocation computing device 20 (see Fig. 1 or Fig. 2) of multiple computing devices 10, 20, 30, 40, 50 (see Figs. 1 and 2) included in a communication system 100 according to Fig. 1. The respective method steps S10 - S60 of the computer-implemented method have already been explained above in terms of Fig. 1 or Fig. 2, which is why, in order to avoid repetitions, the method steps S10 - S60 are not explained again. This also applies to the method steps S70, S80 - S83 and S90 - S93 which are embodiments of the method steps S10 - S60 of the computer-implemented method and are thus connected to the method steps S10 - S60 in Fig. 4 via respective dashed lines including at one end an arrow.

Although the present invention has been described in accordance with preferred embodiments, it is obvious for the person skilled in the art that modifications are possible in all embodiments.

## Claims

1. Computer-implemented method for providing an application (APP) to a relocation computing device (20) of multiple computing devices (10, 20, 30, 40, 50) included in a communication system (100), the method comprising:
a) transmitting (S10) a specification including a desired application demand of the application (APP) to an orchestration unit (60),
b) selecting (S20), by the orchestration unit (60), a group of possible target computing devices (10, 20, 30, 40) out of the multiple computing devices (10, 20, 30, 40, 50) based on the desired application demand and device specifications of each of the multiple computing devices (10, 20, 30, 40),
c) examining (S30), by the orchestration unit (60), each possible target computing device (10, 20, 30, 40) of the selected group with respect to its respective device specifications for obtaining load information indicating a current computational load of each possible target computing device (10, 20, 30, 40),
d) allocating (S40), by the orchestration unit (60), each possible target computing device (10, 20, 30, 40) of the selected group to a specific computing group out of multiple different computing groups in dependence on a respective type of each possible target computing device (10, 20, 30, 40), wherein the multiple different computing groups include a first group including a relocation computing device type, wherein at least one of the possible target computing devices (10, 20, 30, 40) of the selected group is formed as a relocation computing device (20) and is allocated to the first group,
e) determining (S50), by the orchestration unit (60), a relocation plan (70) in dependence on at least the obtained load information, characteristics of the application (APP) and the possible target computing devices (10, 20, 30, 40) of the selected group, in particular the relocation computing device (20), wherein the determined relocation plan (70) indicates specific preparation steps of a set of preparation steps which are executable at least on the relocation computing device (20) and indicates a preparation time period (T1) describing a time period for executing the specific preparation steps of the set of preparation steps, and
f) translating (S60) the relocation plan (70) into computer commands and applying the computer commands at a first time point (t₀) on the relocation computing device (20) for executing the specific preparation steps on the relocation computing device (20).

2. The method according to claim 1,
**characterized in**
**that** the multiple different computing groups include a second group including an active computing device type, wherein at least one of the possible target computing devices (10, 20, 30, 40) of the selected group is formed as an active computing device (10) and is allocated to the second group, wherein step f) (S60) further includes:
applying the computer commands at the first time point (t₀) for executing a deployment (DEPLOY) of the application (APP) on the active computing device (10), wherein the deployment (DEPLOY) includes executing the specific preparation steps at the first time point (t₀) and starting the application (APP) after the preparation time period (T1).

3. The method according to claim 2,
**characterized by**:
g) monitoring (S70) a device status of the active computing device (10) including a status of the application (APP) for obtaining first status information of the active computing device (10) and monitoring a device status of the relocation computing device (20) including a further status of the application (APP) for obtaining second status information of the relocation computing device (20).

4. The method according to claim 3,
**characterized in**
**that** if the obtained first status information indicates that the active computing device (10) has a failure, the method further comprising the steps:
h) executing (S80) a relocation of the application (APP) from the active computing device (10) to the relocation computing device (20), wherein the executing of the relocation of the application (APP) includes:
h1) determining (S81) a relocation time period (T2) for executing first relocation steps of a set of relocation steps on the relocation computing device (20) in dependence on communication parameters of the communication system (100),
h2) executing (S82) the first relocation steps on the relocation computing device (20) in dependence on the determined relocation time period (T2) at a second time point (t₁) after the preparation time period (T1), wherein step h2) (S82) includes:
adding a further relocation computing device (30) out of the selected group of possible target computing devices (10, 20, 30, 40) to the first group,
updating the relocation plan (70) for obtaining an updated relocation plan, wherein the updated relocation plan indicates that the active computing device (10) is removed from the second group and the relocation computing device (20) is switched into an active state, and
translating the updated relocation plan into updated computer commands and applying the updated computer commands at the second time point (t₁) on the further relocation computing device (30) for executing the specific preparation steps on the further relocation computing device (30) during a further preparation time period (T2a) which is between the second time point (t₁) and a third time point (t₂), and
h3) starting (S83) the application (APP) on the relocation computing device (20) at the third time point (t₂) after the executing according to step h2) (S82).

5. The method according to claims 3 and 4,
**characterized in**
**that** if the obtained second status information indicates that the relocation computing device (20) has a failure, the method further comprising the steps:
i) executing (S90) a further relocation of the application (APP) from the relocation computing device (20) to the further relocation computing device (30), wherein the executing of the further relocation of the application (APP) includes:
i1) determining (S91) a further relocation time period (T3) for executing second relocation steps of the set of relocation steps on the further relocation computing device (30) in dependence on the communication parameters,
i2) executing (S92) the second relocation steps on the further relocation computing device (30) in dependence on the determined further relocation time period (T3) at a third time point (t₂) after the further preparation time period (T2a), wherein step i2) (S92) includes:
adding another relocation computing device (40) out of the selected group of possible target computing devices (10, 20, 30, 40) to the first group,
updating the updated relocation plan for obtaining a further updated relocation plan, wherein the further updated relocation plan indicates that the relocation computing device (20) is removed from the first group and the further relocation computing device (30) is switched into an active state, and
translating the further updated relocation plan into further updated computer commands and applying the further updated computer commands at the third time point (t₂) on the another relocation computing device (40) for executing the specific preparation steps on the another relocation computing device (40) during another preparation time period (T3a) which is between the third time point (t₂) and a fourth time point (t₃), and
i3) starting (S93) the application (APP) on the further relocation computing device (30) at the fourth time point (t₃) after the executing according to step i2) (S92).

6. The method according to one of claims 1 - 5,
**characterized in**
**that** the specific preparation steps include downloading an application image of the application (APP) and building a container for the downloaded application image.

7. The method according to one of claims 1 - 6,
**characterized in**
**that** step b) (S20) further includes:
selecting, by the orchestration unit (60), the group of possible target computing devices (10, 20, 30, 40) out of the multiple computing devices (10, 20, 30, 40, 50) based on the desired application demand and the device specifications of each of the multiple computing devices (10, 20, 30, 40, 50) and/or based on the obtained load information.

8. The method according to one of claims 1 - 7,
**characterized in**
**that** the load information as well as the characteristics of the application (APP) for determining the relocation plan (70) according to step e) (S50) are obtained in dependence on test runs of the application (APP), reports from possible target computing devices (10, 20, 30, 40) of the selected group and/or executed models of the application (APP) and/or the possible target computing devices (10, 20, 30, 40) of the selected group.

9. The method according to one of claims 2 - 8,
**characterized by**:
tracking a location of a mobile entity during its motion from a first area including the active computing device (10) to a second area including a further active computing device,
determining a specific point in time when the mobile entity leaves the first area,
executing the specific preparation steps on the further active computing device prior to the determined specific point in time, and
starting the application (APP) at a further point in time on the further active computing device when the mobile entity leaves the first area and after the execution of the specific preparation steps.

10. The method according to one of claims 1 - 9,
**characterized in**
**that** the desired application demand is formed as a maximal unavailability time for the application (APP), as an availability of the application (APP), as a throughput of the application (APP) and/or as a delay when relocating the application (APP).

11. The method according to one of claims 1 - 10,
**characterized in**
**that** the application (APP) is formed as an edge application, wherein the possible target computing devices (10, 20, 30, 40) of the selected group allocated to the relocation computing device type as well as allocated to the active computing device type are respectively formed as an edge device.

12. The method according to one of claims 5 - 11,
**characterized in**
**that** the relocation computing device (20) is a backup device on which the application (APP) can be started if the active computing device (10) has the failure, wherein the further relocation computing device (30) is a spare device on which the application (APP) can be started if the relocation computing device (20) has the failure.

13. A computer program product comprising a program code for executing the computer-implemented method according to one of claims 1 - 12 when run on at least one computer.

14. Communication system (100) for providing an application (APP) to a relocation computing device (20) of multiple computing devices (10, 20, 30, 40, 50) included in the communication system (100), the communication system (100) comprising:
an orchestration unit (60),
the application (APP),
an administration entity (80),
a management unit (55), and
the relocation computing device (20), wherein
the administration entity (80) is configured to transmit a specification including a desired application demand of the application (APP) to the orchestration unit (60), wherein the orchestration unit (60) is configured to:
select a group of possible target computing devices (10, 20, 30, 40) out of the multiple computing devices (10, 20, 30, 40, 50) based on the desired application demand and device specifications of each of the multiple computing devices (10, 20, 30, 40, 50),
examine each possible target computing device (10, 20, 30, 40) of the selected group with respect to its respective device specifications for obtaining load information indicating a current computational load of each possible target computing device (10, 20, 30, 40),
allocate each possible target computing device (10, 20, 30, 40) of the selected group to a specific computing group out of multiple different computing groups in dependence on a respective type of each possible target computing device (10, 20, 30, 40), wherein the multiple different computing groups include a first group including a relocation computing device type, wherein at least one of the possible target computing devices (10, 20, 30, 40) of the selected group is formed as a relocation computing device (20) and is allocated to the first group,
determine a relocation plan (70) in dependence on at least the obtained load information, characteristics of the application (APP) and the possible target computing devices (10, 20, 30, 40) of the selected group, in particular the relocation computing device (20), wherein the determined relocation plan (70) indicates specific preparation steps of a set of preparation steps which are executable at least on the relocation computing device (20) and indicates a preparation time period (T1) describing a time period for executing the specific preparation steps of the set of preparation steps, and
translate the relocation plan (70) into computer commands, wherein the management unit (55) is configured to:
apply the computer commands at a first time point (t₀) on the relocation computing device (20) for executing the specific preparation steps on the relocation computing device (20) .

15. Communication system (100) according to claim 14, **characterized by**:
an active computing device (10) which is formed as one of the possible target computing device (10, 20, 30, 40) of the selected group, wherein the multiple different computing groups include a second group including an active computing device type, wherein the active computing device (10) is allocated to the second group, wherein the management unit (55) is further configured to:
apply the computer commands at the first time point (t₀) for executing a deployment of the application (APP) on the active computing device (10), wherein the deployment includes executing the specific preparation steps at the first time point (t₀) and starting the application (APP) after the preparation time period (T1).
